(19)

**Europäisches Patentamt**
**European Patent Office**
**Office européen des brevets**

(11) **EP 4 564 592 A1**

(12) **EUROPEAN PATENT APPLICATION**

(43) Date of publication:
04.06.2025 Bulletin 2025/23

(21) Application number: 24216010.9

(22) Date of filing: 28.11.2024

(51) International Patent Classification (IPC):
H01P 1/213 (2006.01)     H01Q 21/06 (2006.01)
H01P 5/16 (2006.01)      H01Q 9/04 (2006.01)

(52) Cooperative Patent Classification (CPC):
H01P 5/16; H01Q 21/065; H01Q 9/0435

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.11.2023 CN 202311625134

(71) Applicants:
• Chiun Mai Communication Systems, Inc.
New Taipei City 236 (TW)
• Shenzhen Futaihong Precision Industry Co., Ltd.
ShenZhen, Guangdong 518109 (CN)

(72) Inventors:
• CHANG, Lung-Ta
236 New Taipei (TW)
• CHEN, Chia-Hsien
236 Taipei City (TW)
• TAI, Shao-Yi
236 New Taipei (TW)
• KAO, Ping-Shi
236 New Taipei (TW)
• HUANG, Peng-Hao
236 New Taipei (TW)
• CHANG, Tsung-Bin
236 New Taipei (TW)

(74) Representative: Zaboliene, Reda
Metida
Business center Vertas
Gyneju str. 16
01109 Vilnius (LT)

(54) **MULTIPLEXER AND ARRAY ANTENNA MODULE**

(57) A multiplexer and an antenna array module applying the multiplexer are provided, the array antenna module includes a circuit board having a plurality of layers and an array antenna, the multiplexer includes a first end, at least two second ends, a connecting portion, and a plurality of conductive portions. The second ends and the first end are arranged on a same layer of the circuit board. The connecting portion is connected between the first end and the second ends, the connecting portion arranged on a different layer of the circuit board to the layer which the first end and the at least two second ends are located. The connecting portion is connected to the first end and the second ends through the conductive portions. One of the first end or the at least two second ends is connected to the array antenna for conducting signals of the array antenna.

FIG. 2

**Description**

CROSS-REFERENCE TO RELATED APPLICATIONS

This application claims priority to Chinese Patent Application No. 202311625134.8 filed on November 28, 2023, in China National Intellectual Property Administration, the contents of which are incorporated by reference herein.

FIELD

The subject matter herein generally relates to antenna technology field, and more particularly to a multiplexer and an array antenna module.

BACKGROUND

Low-orbit satellite system (LEO) is a large satellite system composed of multiple satellites that can process real-time information. Low-orbit satellites are also used for communications in mobile terminals such as mobile phones. Due to the low orbit altitude, the mobile terminals using the low-orbit satellite communications have the advantages of short transmission delay and small path loss. A mobile communication system consisting of multiple low-orbit satellites can achieve true global coverage and more efficient frequency reuse. Cellular communication, multiple access, spot beam, frequency reuse and other technologies also provide technical support for the application of low-orbit satellites in mobile communications. In short, low-orbit satellites are currently highly regarded as mobile communication systems.

However, in order to reduce the overall area of the antenna design, the existing array antenna modules used in low-orbit satellites have a relatively close arrangement distance between transmitting antennas and receiving antennas, which makes signal transmission and wiring between antennas difficult, so that the design of the array antenna requires more considerations.

SUMMARY OF THE INVENTION

The application provides a multiplexer and an array antenna module.

A multiplexer provided by the present application applied in an array antenna module, the array antenna module includes a circuit board and an array antenna, the multiplexer includes a first end, at least two second ends, a connecting portion, and a plurality of conductive portions. The at least two second ends and the first end arranged on a same layer of the circuit board. The connecting portion is connected between the first end and the at least two second ends, the first end and the at least two second ends arranged on opposite ends of the connecting portion, the connecting portion arranged on a different layer of the circuit board from the layer when the first end and the at least two second ends are located. The connecting portion connected to the first end and the at least two second ends through the plurality of conductive portions. One of the first end or the at least two second ends is connected to the array antenna for conducting signals of the array antenna.

Further, when the first end is connected to the array antenna, the multiplexer servers as a power divider for receiving the signals through the first end and outputting divided signals through the at least two second ends respectively.

Further, the connecting portion includes a first connecting section and a second connecting section, one end of the first connecting section is connected to the first end, and the other end of the first connecting section is connected to a middle position of a side of the second connecting section, the other side of the second connecting section connected to the at least two second ends, the second connecting section is symmetrical with respect to the first connecting section.

Further, the plurality of conductive portions comprise a first conductive portion, the first conductive portion connects the layer where the first end is located and the layer where the connecting portion is located, one end of the first conductive portion is connected to the first end, and the other end of the first conductive portion is connected to the first connecting section.

Further, the plurality of conductive portions further comprise at least two second conductive portions, the at least two second conductive portions are connected between the at least two second ends and the connecting portion, the at least two second conductive portions connects the layer where the at least two second ends are located and the layer where the connecting portion is located, one end of the at least two second conductive portions is respectively connected to the at least two second ends, and the other end of the at least two second conductive portions is connected to a side of the second connecting section away from the first connecting section.

Further, each of the first end and the at least two second ends have a first resistance value, and the connecting portion has a second resistance value, the first resistance value is less than or equal to the second resistance value.

Further, when the at least two second ends are connected to the array antenna, the multiplexer servers as a power combiner for receiving the signals of the array antenna through the at least two second ends and outputting a combined signal through the first end.

Further, the multiplexer further includes a resistor, wherein the resistor contacts the connecting portion through the plurality of conductive portions; the resistor, the connecting portion, and the at least two second ends are arranged on different layers of the circuit board, the resistor is arranged on a surface layer of the circuit board.

An array antenna module provided by the present application includes a circuit board, an array antenna, and the plurality of multiplexers. The circuit board has a plurality of layers. The array antenna is arranged on a surface layer of the circuit board in a predetermined arrangement. The plurality of multiplexers and the array antenna are arranged on different layers of the circuit board.

Further, in the plurality of multiplexers, the multiplexers in a same stage are connected in parallel.

Further, the array antenna includes a plurality of antennas arranged in rows, in each row, every two adjacent antennas are spaced apart by a predetermined distance, every two adjacent rows of antennas are staggered to form an array arrangement, the plurality of multiplexer are staggered between the antennas.

Further, the multiplexer further includes a resistor, the resistor contacts the connecting portion through the plurality of conductive portions; the resistor, the connecting portion, and the at least two second ends are arranged on different layers of the circuit board in sequence, the resistor and the array antenna are arranged opposite surface layers of the circuit board.

Further, the array antenna module further includes a first ground layer, a second ground layer, and a third ground layer, wherein the first ground layer is arranged on a first layer of the circuit board and arranged adjacent to the resistor, the second ground layer is arranged on a second layer of the circuit board and arranged adjacent to the connecting portion, the third ground layer is arranged on a fourth layer of the circuit board; the first ground layer, the second ground layer, and the third ground layer are configured to provide grounding for the array antenna and the plurality of multiplexers.

Further, the first end and the at least two second ends are arranged on a third layer of the circuit board, the array antenna is arranged on a fifth layer of the circuit board, the first layer to the fifth layer are spaced apart from each other and arranged in parallel.

The multiplexer provided in the present application is connected to the array antenna through one of the first end or at least two second ends, so that the multiplexer can conduct the signal of the array antenna, and the connecting portion and the first end and at least two second ends are arranged on different layers of the circuit board, so that the multiplexer is not arranged flat on the same plane, saving the design space of the multiplexer on the plane, and is more conducive to the signal transmission wiring of the array antenna module.

## BRIEF DESCRIPTION OF THE DRAWINGS

Implementations of the present disclosure will now be described, by way of embodiments, with reference to the attached figures.

FIG. 1 is a functional block diagram of an array antenna module according to an embodiment of the present application.

FIG. 2 is a structural diagram of a multiplexer of the array antenna module according to an embodiment of the present application.

FIG. 3 is a cross-sectional view of the array antenna module according to an embodiment of the present application.

FIG. 4 is a structural diagram of the array antenna module according to another embodiment of the present application.

FIG. 5 is an enlarged schematic diagram of the V region of the array antenna module shown in FIG. 4.

FIG. 6 is an S-parameter curve diagram of the multiplexer according to an embodiment of the present application.

FIG. 7 is an S-parameter curve diagram of the multiplexer according to another embodiment of the present application.

## DETAILED DESCRIPTION

It will be appreciated that for simplicity and clarity of illustration, where appropriate, reference numerals have been repeated among the different figures to indicate corresponding or analogous elements. Additionally, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. The drawings are not necessarily to scale and the proportions of certain parts may be exaggerated to better illustrate details and features. The description is not to be considered as limiting the scope of the embodiments described herein.

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "substantially" is defined to be essentially conforming to the particular dimension, shape, or another word that "substantially" modifies, such that the component need not be exact. For example, "substantially cylindrical" means that the object resembles a cylinder, but can have one or more deviations from a true cylinder. The term "comprising" means "including, but not necessarily limited to"; it specifically indicates open-ended inclusion or membership in a so-described combination, group, series, and the like.

Low-orbit satellite system (LEO) is a large satellite system composed of multiple satellites that can process real-time information. Low-orbit satellites are also used for communications in mobile terminals such as mobile phones. Due to the low orbit altitude, the mobile terminals using the low-orbit satellite communications have the advantages of short transmission delay and small path loss. A mobile communication system consisting of multiple low-orbit satellites can achieve true global coverage and more efficient frequency reuse. Cellular communication, multiple access, spot beam, frequency reuse and other technologies also provide technical support for the application of low-orbit satellites in mobile communications. In short, low-orbit satellites are currently highly regarded as mobile communication systems.

However, in order to reduce the overall area of the antenna design, the existing array antenna modules used in low-orbit satellites have a relatively close arrangement distance between transmitting antennas and receiving antennas, which makes signal transmission and wiring between antennas difficult, so that the design of the array antenna requires more considerations.

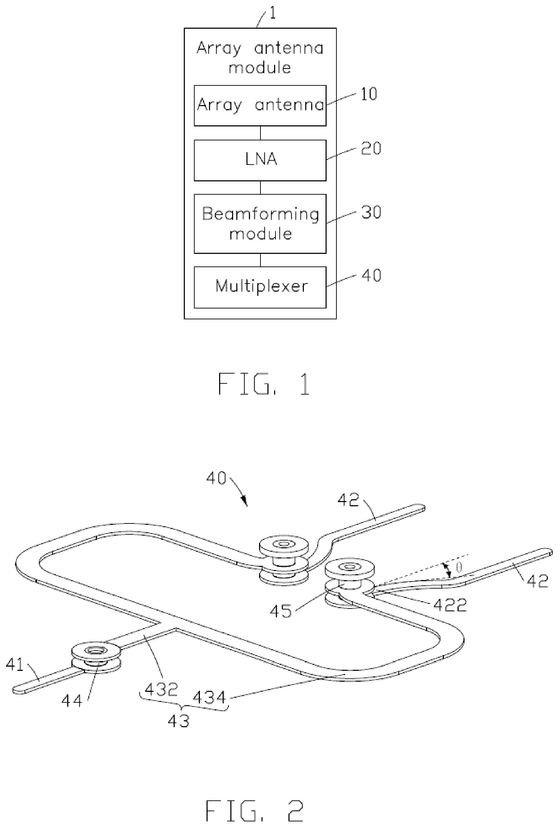

Referring to FIG. 1, FIG. 1 illustrates a functional block diagram of an array antenna module 1 according to an embodiment of the present application. The array antenna module 1 can be applied in a wireless communication device (not shown) for realizing wireless communication of the wireless communication device based on low-orbit satellites. The array antenna module 1 can be configured to transmit or receive wireless communication signals for realizing wireless communication.

Referring to FIG. 1, the array antenna module 1 includes an array antenna 10, a low noise amplifier (LNA) 20, a beamforming module 30, a multiplexer 40, and a circuit board 50.

The circuit board 50 may be a multi-layer circuit board structure. The array antenna 10, the LNA 20, the beamforming module 30, and the multiplexer 40 are electrically connected in sequence and arranged on the circuit board 50. In some embodiments, the array antenna 10, the LNA 20, the beamforming module 30, and the multiplexer 40 may be arranged on different layers of the circuit board 50.

The array antenna 10 is configured to transmit or receive wireless communication signals. The LNA 20 can be used to obtain a wireless communication signal from the array antenna 10 and output the wireless communication signal to the beamforming module 30 after amplification, or obtain a wireless communication signal from the beamforming module 30 and output the wireless communication signal to the array antenna 10 after amplification. The beamforming module 30 can be used to obtain the wireless communication signal from the array antenna 10 through the LNA 20 and analyze it, or compile the wireless communication signal and transmit it to the array antenna 10 through the LNA 20. The multiplexer 40 may be used to output the wireless communication signal received from the array antenna 10 after being analyzed by the beamforming module 30, or to conduct the input wireless communication signal compiled by the beamforming module 30 and transmit it by the array antenna 10.

Referring to FIG. 2 together, the multiplexer 40 includes a first end 41, at least two second ends 42, a connecting portion 43, a first conductive portion 44, and at least two second conductive portions 45.

One of the first end 41 and the at least two second ends 42 is connected to the array antenna 10 through the beamforming module 30 and the LNA 20 in sequence, for conducting the wireless communication signal of the array antenna 10. In some embodiments, the first end 41 and the at least two second ends 42 are both substantially linear metal segment structures and are substantially parallel or non-parallel to each other. The first end 41 and the at least two second ends 42 are coplanar and arranged on a same layer of the circuit board 50, for example, a third layer. In some embodiments, the at least two second ends 42 may be symmetrical or asymmetrical structures, for example, the at least two second ends 42 may be symmetrically or asymmetrically arranged with respect to the first end 41. It can be understood that when the at least two second ends 42 are arranged in parallel or symmetrically, the at least two second ends 42 may have substantially the same signal conduction path, and have a better signal conduction effect.

In some embodiments, when the at least two second ends 42 are connected to the array antenna 10 through the beamforming module 30 and the LNA 20 in sequence, the multiplexer 40 can be a power combiner for receiving the wireless communication signal of the array antenna 10 through the at least two second ends 42 and outputting a combined signal through the first end 41. Alternatively, when the first end 41 is connected to the array antenna 10 through the beamforming module 30 and the LNA 20 in sequence, the multiplexer 40 can be a power divider for receiving the wireless communication signal through the first end 41 and outputting divided signals through the at least two second ends 42 respectively.

The connecting portion 43 is connected between the first end 41 and the at least two second ends 42, the first end 41 and the at least two second ends 42 are arranged on opposite ends of the connecting portion 43. The connecting portion 43 may include a first connecting section 432 and a second connecting section 434. In some embodiments, the first connecting section 432 is substantially a straight metal section, and the second connecting section 434 is substantially a rectangular ring-shaped metal section structure. One end of the first connecting section 432 is connected to the first end 41, and the other end of the first connecting section 432 is connected to a substantially middle position of a long side of the second connecting section 434. The other long side of the second connecting section 434 can be connected to the at least two second ends 42 respectively. In some embodiments, the connecting portion 43 is not coplanar with the first end 41 and the at least two second ends 42, and can be arranged on different layers of the circuit board 50. For example, the connecting portion 43 can be arranged on a second layer of the circuit board 50. In some embodiments, the connecting portion 43 is arranged on the second layer of the circuit board 50, which is convenient to arrange wiring with other multiplexers 40. In some embodiments, the second connecting section 434 may also be in other symmetrical regular shapes, such as a circle, an ellipse, a rectangle, etc., and the second connecting section 434 is symmetrical with respect to the first connecting section 432.

In some embodiments, each of the first end 41 and the at least two second ends 42 have a first resistance value, and the connecting portion 43 has a second resistance value, wherein the first resistance value may be less than or equal to the second resistance value. The first resistance value may be, but is not limited to, 50 ohms ($\Omega$), and the second resistance value may be, but is not limited to, 70.7 ohms. In some embodiments, a signal conduction path of the first end 41 is divided into two signal conduction paths of the at least two second ends 42, in order to make the energy equal, the connecting portion 43 connecting the first end 41 and the at least two second ends 42 meets a formula $Z = \sqrt{2} * Z_0$ , wherein $Z_0$ is the first resistance value of the first end 41 and the at least two second ends 42, that is Zo=50 ohms, Z is the second resistance value of the connecting portion 43, calculation shows that Z=70.7 ohms. Since the first end 41 and the at least two second ends 42 are respectively set with the same preset resistance value, and the connecting portion 43 is set with a different preset resistance value, the energy conducted by the first end 41, the connecting portion 43, and the at least two second ends 42 is substantially equal, thereby reducing the loss of energy conduction. The first connecting section 432 can be used to convert the first resistance value of the first end 41 to the second resistance value of the connecting portion 43 during energy conduction, or to convert the second resistance value of the connecting portion 43 to the first resistance value of the first end 41. In some embodiments, to match the configuration of the array antenna module 1, the connecting portion 43, the first end 41, and the at least two second ends 42 may have different line widths, so that the connecting portion 43, the first end 41, and the at least two second ends 42 may have substantially equal signal conduction powers.

The first conductive portion 44 is connected between the first end 41 and the connecting portion 43, and the first conductive portion 44 connects the layer or plane where the first end 41 is located and the layer or plane where the connecting portion 43 is located, that is, the first conductive portion 44 connects the second layer and the third layer of the circuit board 50. In some embodiments, the first conductive portion 44 may be, but is not limited to, a metal column, one end of the metal column is connected to the first end 41, and the other end of the metal column is connected to the first connecting section 432.

The at least two second conductive portions 45 are connected between the at least two second ends 42 and the connecting portion 43, and the second conductive portions 45 connect the layer or plane where the at least two second ends 42 are located and the layer or plane where the connecting portion 43 is located, that is, the second conductive portions 45 connect the second layer and the third layer of the circuit board 50. In some embodiments, the second conductive portions 45 may be, but are not limited to, two metal pillars, one end of the two metal pillars is respectively connected to the at least two second ends 42, and the other end of the two metal pillars is connected to a side of the second connecting section 434 away from the first connecting section 432. In some embodiments, an extension line of the first connecting section 432 is substantially perpendicular to a connection line of the two second conductive portions 45 (i.e., the two metal pillars).

In some embodiments, each of the at least two second ends 42 includes a connection point 422. The connection points 422 of the at least two second ends 42 are connected to the second conductive portions 45, respectively. The second end 42 is formed by the connection point 422 extending outward from the second conductive portion 45. A direction in which the second end 42 extends outward from the connection point 422 and a direction perpendicular to the second connecting section 434 form an angle θ . In some embodiments, the angle θ may range from, but is not limited to, 0 degrees to 90 degrees.

Referring to FIG. 2 again, in some embodiments, the signal conduction direction of the first end 41 is substantially the same as the signal conduction direction of the at least two second ends 42. In some embodiments, a vector difference between the signal conduction direction of the first end 41 and the signal conduction direction of the at least two second ends 42 may be 0 degrees to 90 degrees. For instance, the signal conduction direction of the first end 41 is toward the first conductive portion 44, the first conductive portion 44 conducts the signal to the first connecting section 432, and the signal conduction direction of the first connecting section 432 is from the first conductive portion 44 toward the second connecting section 434, but the signal conduction direction of the first end 41 is consistent with the signal conduction direction of the first connecting section 432. The signal conduction direction of the first end 41 and the first connecting section 432 can be defined as a first vector. The second connecting section 434 obtains the signal from the first connecting section 432 and conducts the signal to the two second conductive portions 45. The at least two second ends 42 are respectively connected to the two second conductive portions 45 through the connection points 422 and serve as endpoints of the signal conduction of the at least two second ends 42. The structure along the at least two second ends 42 serves as the signal conduction paths of the at least two second ends 42. The signal conduction direction of the at least two second ends 42 can be defined as a second vector. A vector difference between the first vector and the second vector can be 0 degrees to 90 degrees. It can be understood that when the at least two second ends 42 are signal input ends, the first end 41 is a signal output end, and the signal conduction path can be the same as described above, but the signal conduction direction is opposite, which will not be repeated here.

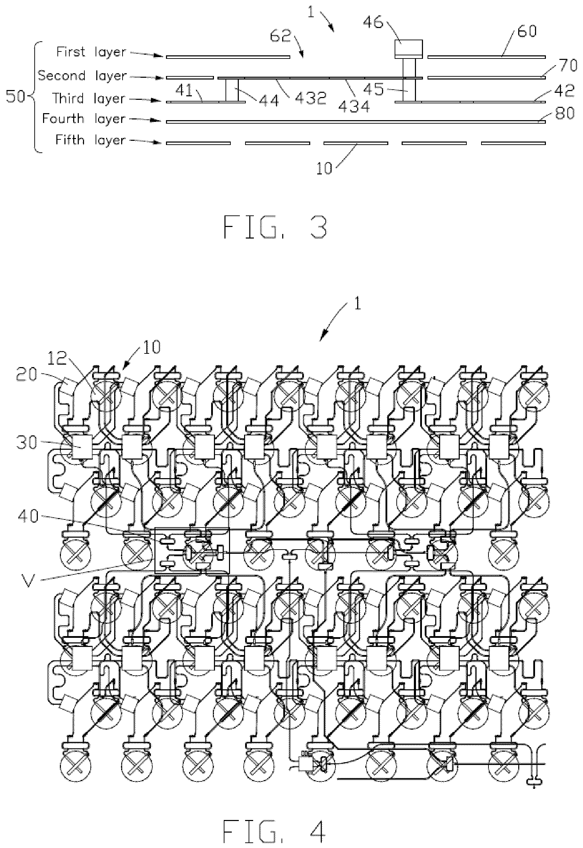

Please refer to FIG. 3, the multiplexer 40 may further include a resistor 46. The resistor 46 may be in contact with the connecting portion 43 through the second conductive portion 45. In some embodiments, the resistor 46 is not on the same plane as the first end 41, the at least two second ends 42, and the connecting portion 43. The resistor 46 can be arranged on the first layer of the circuit board 50. In some embodiments, the second conductive portion 45 can be respectively connected to the resistor 46, the second connecting section 434 of the connecting portion 43, and the at least two second ends 42, that is, the second conductive portion 45 can connect the first layer, the second layer, and the third layer of the circuit board 50.

In some embodiments, the array antenna 10 can be arranged on another layer of the circuit board 50, which is not coplanar with the layer where the first end 41 and the at least two second ends 42 are located and the layer where the connecting portion 43 is located. For example, the array antenna 10 can be arranged on a fifth layer of the circuit board 50. In some embodiments, the fifth layer where the array antenna 10 is located may be a surface layer of the array antenna module 1, and the first layer where the resistor 46 is located may be an internal layer of the array antenna module 1. In other embodiments, the first layer where the resistor 46 is located may be a surface layer of the array antenna module 1, and the fifth layer where the array antenna 10 is located may be an internal layer of the array antenna module 1.

In some embodiments, the array antenna module 1 may further include a first ground layer 60, a second ground layer 70, and a third ground layer 80.

The first ground layer 60 may be arranged on the first layer of the circuit board 50 and arranged adjacent to the resistor 46. The second ground layer 70 may be arranged on the second layer of the circuit board 50 and arranged adjacent to the connecting portion 43. The third ground layer 80 may be arranged on a fourth layer of the circuit board 50. The third ground layer 80 may be located between the layer where the array antenna 10 is located and the layer where the first end 41 and the at least two second ends 42 are located. The first ground layer 60, the second ground layer 70, and the third ground layer 80 may be used to provide grounding for the array antenna 10 and the multiplexer 30. The second ground layer 70 and the third ground layer 80 may be used as reference grounds for the first end 41 and the at least two second ends 42, and the third ground layer 80 may be used as a reference ground for the connecting portion 43.

In some embodiments, the first ground layer 60 is provided with an opening 62, and the opening 62 is arranged corresponding to the connecting portion 43, so that the connecting portion 43 can have a larger wiring width on the circuit board 50, thereby reducing the energy conduction loss of the connecting portion 43 when conducting signals.

In some embodiments, a first through hole is formed through the second layer to the third layer of the circuit board 50. The second through hole is filled with a metal conductor to form the first conductive portion 44. The first conductive portion 44 penetrates the second layer to the third layer of the circuit board 50 to respectively connect the connecting portion 43 on the second layer and the first end 41 on the third layer, to achieve electrical connection and signal conduction between the connecting portion 43 and the first end 41. Second through holes are formed through the first layer to the third layer of the circuit board 50. The second through hole are filled with metal conductors to form the two second conductive portions 45. The second conductive portions 45 penetrate the first layer to the third layer of the circuit board 50 to respectively connect the resistor 46 located on the first layer, the connecting portion 43 located on the second layer, and the at least two second ends 42 located on the third layer, so as to realize electrical connection and signal conduction among the resistor 46, the connecting portion 43, and the at least two second ends 42. It can be understood that the first to fifth layers of the circuit board 50 can be spaced apart from each other and arranged in parallel.

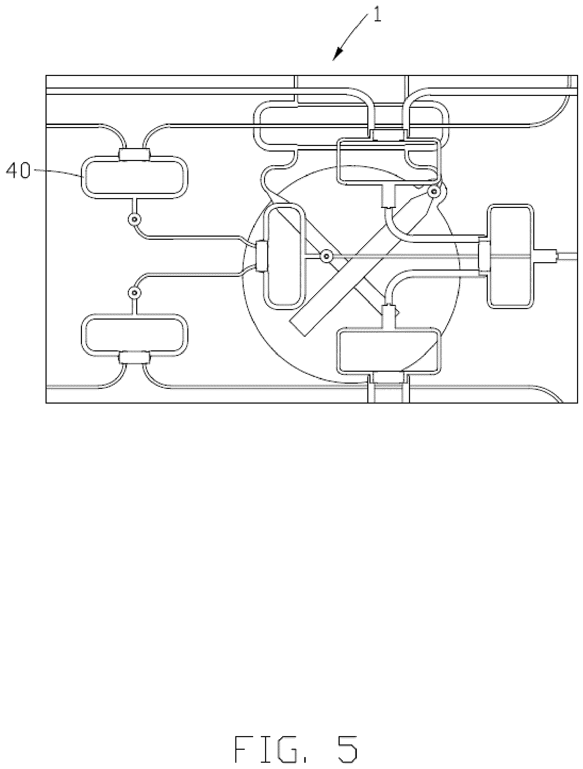

Referring to FIGS. 4 and 5, the array antenna 10 may include a plurality of antennas 12.

The plurality of antennas 12 are arranged in rows. In each row, every two adjacent antennas 12 are spaced apart by a predetermined distance. Every two adjacent rows of antennas 12 are staggered to form an array arrangement, that is, the array antenna 10. For instance, in an $N+1^{th}$ row, each antenna 12 is staggered between two adjacent antennas 12 in a $N^{th}$ row, where N is a positive integer greater than or equal to 1.

The multiplexer 40 is staggered between the antennas 12. In some embodiments, the array antenna module 1 may include a plurality of multiplexers 40, and each multiplexer 40 may be connected to two antennas 12 through the beamforming module 30 and the LNA 20. For example, each multiplexer 40 may be connected to two antennas 12 through the at least two second ends 42. When the array antenna 10 is arranged in a predetermined array, every two antennas 12 are connected to one multiplexer 40, and the multiplexer 40 inputs the wireless communication signals of the two antennas 12 through the at least two second ends 42, and outputs one signal through the first end 41. It can be understood that the plurality of multiplexers 40 connected to the antennas 12 are connected in parallel and are located at a same stage. After these multiplexers 40 output one signal, it is output again to the at least two second ends 42 of the multiplexer 40 of a next stage, the first end 41 of the multiplexer 40 of the next stage further outputs one signal, and so on. Through the cascade connection of multiple stages of multiplexers 40, finally the multiplexer 40 of a last stage outputs one signal. It can be understood that in signal conduction of multiplexers 40 at multiple stages, the multiplexers 40 at the same stage are connected in parallel, and the multiplexers 40 at different stages are connected in series. Wherein, the plurality can include "one" or "plurality".

For instance, in a 4*4 array antenna, there are four rows arranged, four antennas 12 in each row, and sixteenth antennas 12 in total. Every two antennas 12 are connected to one multiplexer 40, so the sixteenth antennas 12 are connected to eight multiplexers 40, and the eight multiplexers 40 may be located in a first stage. The eight multiplexers 40 can conduct the wireless communication signals of the sixteenth antennas 12 and output them as eight signals, the eight signals are then connected to one multiplexer 40 by connecting every two signals, thus, the eight signals are connected to four multiplexers 40, and the four multiplexers 40 can be located in a second stage. The four multiplexers 40 can conduct the preceding eight signals and output them as four signals. The four signals are then connected to one multiplexer 40 by connecting every two signals, thus, the four signals are further connected to two multiplexers 40, and the two multiplexers 40 can be located at a third stage. The two multiplexers 40 can conduct the preceding four signals and output them as two signals, and the two signals are connected to one multiplexer 40, the multiplexer 40 can be located at a fourth stage, and the multiplexer 40 can conduct the preceding two signals and finally output one signal. It can be understood that the signal finally outputted by the array antenna module 1 through the multi-stage multiplexer 40 can be outputted to other modules or components of the wireless communication device to realize wireless communication of the wireless communication device.

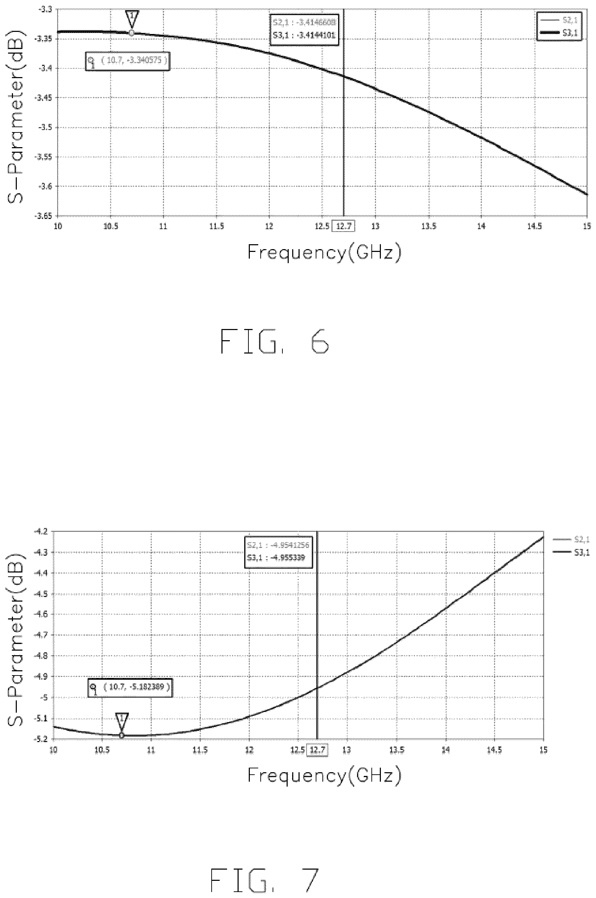

Referring to FIGS. 6 and 7, FIG. 6 shows an S-parameter curve diagram when the first end 41 and the at least two second ends 42 of the multiplexer 40 are arranged on the same layer of the circuit board 50, i.e., the third layer, and the connecting portion 43 is arranged on another layer of the circuit board 50, i.e., the second layer. At this time, an overall loss of the multiplexer 40 is approximately from 3.34 decibels (dB) to 3.41 decibels (dB). FIG. 7 shows an S-parameter curve diagram when the first end 41, the at least two second ends 42, and the connecting portion 43 of the multiplexer 40 are arranged on the same layer of the circuit board 50, i.e., the third layer. At this time, an overall loss of the multiplexer 40 is approximately from 4.91 decibels (dB) to 5.18 decibels (dB). It can be seen that the loss is relatively greater in the inner layer, and compared with the two arrangements of FIG. 6 and FIG. 7, the first end 41 and the at least two second ends 42 of the multiplexer 40 in the embodiment of the present application and the connecting portion 43 are arranged on different layers of the circuit board 50 (especially the connecting portion 43 is arranged at the outer layer of the circuit board 50). Compared with the first end 41, at least two second ends 42, and the connecting portion 43 of the multiplexer 40 being arranged on the same layer of the circuit board 50, the signal conduction loss of the multiplexer 40 in the embodiment of the present application is lower, which is more conducive to the multiplexer 40 being used for signal conduction of the array antenna 10.

The multiplexer 40 provided in the present application is connected to the array antenna 10 through one of the first end 41 or the at least two second ends 42, so that the multiplexer 40 can conduct the signal of the array antenna 10, the connecting part 43 and the first end 41 and the at least two second ends 42 are arranged on different layers of the circuit board 50, so that the multiplexer 40 is not arranged flat on the same plane, which saves the design space of the multiplexer 40 on the plane, being more conducive to the signal conduction wiring of the array antenna module 1, and the loss of the multiplexer 40 during signal conduction is low, which is more conducive to the use of the multiplexer 40 for signal conduction of the array antenna 10.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure, up to and including the full extent established by the broad general meaning of the terms used in the claims.

**Claims**

1. A multiplexer (30) applied in an array antenna module (1), the array antenna module (1) comprising a circuit board (50) having a plurality of layers and an array antenna (10), the multiplexer (30) comprising:

   a first end (41); and
   at least two second ends (42), the at least two second ends (42) and the first end (41) arranged on a same layer of the circuit board (50);
   a connecting portion (43) connected between the first end (41) and the at least two second ends (42), the first end (41) and the at least two second ends (42) arranged on opposite ends of the connecting portion (43), the connecting portion (43) arranged on a different layer of the circuit board (50) to the layer which the first end (41) and the at least two second ends (42) are located; and
   a plurality of conductive portions, the connecting portion (43) connected to the first end (41) and the at least two second ends (42) through the plurality of conductive portions;

wherein one of the first end (41) or the at least two second ends (42) is connected to the array antenna (10) for conducting signals of the array antenna (10).

2. The multiplexer (30) of claim 1, wherein when the first end (41) is connected to the array antenna (10), the multiplexer (30) servers as a power divider for receiving the signals through the first end (41) and outputting divided signals through the at least two second ends (42) respectively.

3. The multiplexer (30) of claim 1, wherein the connecting portion (43) comprises a first connecting section (432) and a second connecting section (434), one end of the first connecting section (432) is connected to the first end (41), and the other end of the first connecting section (432) is connected to a middle position of a side of the second connecting section (434), the other side of the second connecting section (434) connected to the at least two second ends (42), the second connecting section (434) is symmetrical with respect to the first connecting section (432).

4. The multiplexer (30) of claim 3, wherein the plurality of conductive portions comprise a first conductive portion (44), the first conductive portion (44) connects the layer where the first end (41) is located and the layer where the connecting portion (43) is located, one end of the first conductive portion (44) is connected to the first end (41), and the other end of the first conductive portion (44) is connected to the first connecting section (432).

5. The multiplexer (30) of claim 3, wherein the plurality of conductive portions further comprise at least two second conductive portions (45), the at least two second conductive portions (45) are connected between the at least two second ends (42) and the connecting portion (43), the at least two second conductive portions (45) connects the layer where the at least two second ends (42) are located and the layer where the connecting portion (43) is located, one end of the at least two second conductive portions (45) is respectively connected to the at least two second ends (42), and the other end of the at least two second conductive portions (45) is connected to a side of the second connecting section (434) away from the first connecting section (432).

6. The multiplexer (30) of claim 1, wherein each of the first end (41) and the at least two second ends (42) have a first resistance value, and the connecting portion (43) has a second resistance value, the first resistance value is less than or equal to the second resistance value.

7. The multiplexer (30) of claim 1, wherein when the at least two second ends (42) are connected to the array antenna (10), the multiplexer (30) servers as a power combiner for receiving the signals of the array antenna (10) through the at least two second ends (42) and outputting a combined signal through the first end (41).

8. The multiplexer (30) of claim 1, further comprising a resistor (46), wherein the resistor (46) contacts the connecting portion (43) through the plurality of conductive portions; the resistor (46), the connecting portion (43), and the at least two second ends (42) are arranged on different layers of the circuit board (50), the resistor (46) is arranged on a surface layer of the circuit board (50).

9. An array antenna module (1) comprising:

a circuit board (50) having a plurality of layers;
an array antenna (10) arranged on a surface layer of the circuit board (50) in a predetermined arrangement; and
a plurality of multiplexers (30) according to any one of claims 1 to 8, the plurality of multiplexers (30) and the array antenna (10) arranged on different layers of the plurality of layers the circuit board (50).

10. The array antenna module (1) of claim 9, wherein in the plurality of multiplexers (30), the multiplexers (30) in a same stage are connected in parallel.

11. The array antenna module (1) of claim 9, wherein the array antenna (10) comprises a plurality of antennas (12) arranged in rows, in each row, every two adjacent antennas (12) are spaced apart by a predetermined distance, every two adjacent rows of antennas (12) are staggered to form an array arrangement, the plurality of multiplexer (30) are staggered between the antennas (12).

12. The array antenna module (1) of claim 9, wherein the multiplexer (30) further comprises a resistor (46), the resistor (46) contacts the connecting portion (43) through the plurality of conductive portions; the resistor (46), the connecting portion (43), and the at least two second ends (42) are arranged on different layers of the circuit board (50) in sequence, the resistor (46) and the array antenna (10) are arranged opposite surface layers of the circuit board (50).

13. The array antenna module (1) of claim 9, further comprising a first ground layer (60), a second ground layer (70), and a third ground layer (80), wherein the first ground layer (60) is arranged on a first layer of the circuit board (50) and arranged adjacent to the resistor (46), the second ground layer (70) is arranged on a second layer of the circuit board (50) and arranged adjacent to the connecting portion (43), the third ground layer (80) is arranged on a fourth layer of the circuit board (50); the first ground layer (60), the second ground layer (70), and the third ground layer (80) are configured to provide grounding for the array antenna (10) and the plurality of multiplexers (30).

14. The array antenna module (1) of claim 13, wherein the first end (41) and the at least two second ends (42) are arranged on a third layer of the circuit board (50), the array antenna (10) is arranged on a fifth layer of the circuit board (50), the first layer to the fifth layer are spaced apart from each other and arranged in parallel.

FIG. 1

FIG. 2

FIG. 3

FIG. 4

FIG. 5

FIG. 6

FIG. 7

Europäisches
Patentamt

European
Patent Office

Office européen
des brevets

## EUROPEAN SEARCH REPORT

**Application Number**

EP 24 21 6010

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHENG JIE ET AL: "Ultra-wideband Wilkinson Power Dividers Based on Substrate Integrated Coaxial Line", 2022 IEEE MTT-S INTERNATIONAL MICROWAVE WORKSHOP SERIES ON ADVANCED MATERIALS AND PROCESSES FOR RF AND THZ APPLICATIONS (IMWS-AMP), IEEE, 27 November 2022 (2022-11-27), pages 1-3, XP034335016, DOI: 10.1109/IMWS-AMP54652.2022.10107128 [retrieved on 2023-04-26] * chapters II and III; figures 1-3, 6 * | 1-8 | INV. H01P1/213 H01Q21/06 H01P5/16 ADD. H01Q9/04 |
| X | US 2021/175635 A1 (BROBSTON MICHAEL [US] ET AL) 10 June 2021 (2021-06-10) * paragraph [0058] - paragraph [0074]; figures 5A-6 * * paragraph [0083] - paragraph [0086]; figures 8A-8C * * paragraph [0100] - paragraph [0102]; figures 11, 14 * | 1-5,7-9 | |
| X | CHIEH JIA-CHI SAMUEL ET AL: "Development of a wide bandwidth Wilkinson power divider on multilayer organic substrates", MICROWAVE AND OPTICAL TECHNOLOGY LETTERS, vol. 52, no. 7, 1 July 2010 (2010-07-01), pages 1606-1609, XP093269278, US ISSN: 0895-2477, DOI: 10.1002/mop.25252 * chapters 1 and 3; figure 1 * | 1-8 | TECHNICAL FIELDS SEARCHED (IPC) H01P H01Q |
| X | EP 3 745 528 A1 (ALCAN SYSTEMS GMBH [DE]) 2 December 2020 (2020-12-02) * paragraphs [0021], [0024], [0028] - paragraph [0036]; figures 1-3, 5, 6 * | 1-5,7,9,10,12 | |

-/--

The present search report has been drawn up for all claims

| Place of search | Date of completion of the search | Examiner |
|---|---|---|
| The Hague | 11 April 2025 | Hueso González, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 24 21 6010

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/069887 A1 (APAYDIN NIL [US] ET AL) 3 March 2022 (2022-03-03) | 1-5,7, 9-12 | |
| A | * paragraph [0059] - paragraph [0064]; figure 1G *<br>* paragraph [0092] - paragraph [0107]; figures 4A-4D *<br>* paragraphs [0142], [0143]; figure 10 *<br>----- | 13,14 | |
| | | | **TECHNICAL FIELDS SEARCHED (IPC)** |

The present search report has been drawn up for all claims

| Place of search | Date of completion of the search | Examiner |
|---|---|---|
| The Hague | 11 April 2025 | Hueso González, J |

EPO FORM 1503 03.82 (P04C01)

## ANNEX TO THE EUROPEAN SEARCH REPORT
## ON EUROPEAN PATENT APPLICATION NO.

EP 24 21 6010

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2025

| Patent document cited in search report | | Publication date | Patent family member(s) | | Publication date |
|---|---|---|---|---|---|
| US 2021175635 | A1 | 10-06-2021 | US | 2021175635 A1 | 10-06-2021 |
| | | | WO | 2019133195 A1 | 04-07-2019 |
| EP 3745528 | A1 | 02-12-2020 | NONE | | |
| US 2022069887 | A1 | 03-03-2022 | TW | 201941551 A | 16-10-2019 |
| | | | US | 2019253125 A1 | 15-08-2019 |
| | | | US | 2022069887 A1 | 03-03-2022 |
| | | | WO | 2020033004 A2 | 13-02-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311625134